# EUROPEAN PATENT APPLICATION

(11) **EP 4 460 053 A1**
(43) Date of publication of application: **06.11.2024**
(21) Application number: 22914565.1
(22) Date of filing: 23.12.2022
(51) Int. Cl.: H04W 4/80, H04B 17/309

(54) **CHANNEL ESTIMATION METHOD AND APPARATUS, TERMINAL, NETWORK SIDE DEVICE, AND MEDIUM**

(30) Priority: 27.12.2021 CN 202111619639
(71) Applicant: VIVO MOBILE COMMUNICATION CO., LTD., Dongguan, Guangdong 523863 (CN)
(72) Inventor: JIANG, Dajie, Dongguan, Guangdong 523863 (CN); HUANG, Wei, Dongguan, Guangdong 523863 (CN); JIAN, Rongling, Dongguan, Guangdong 523863 (CN)
(74) Representative: Murgitroyd & Company
(86) International application number: PCT/CN2022/141567
(87) International publication number: WO 2023/125311

(57) **Abstract**

This application discloses a channel estimation method and apparatus, a terminal, a network-side device, and a medium, and pertains to the field of communication technologies. The channel estimation method provided in an embodiment of this application includes: receiving, by UE from a communication device, first target information, where the first target information is used to indicate: parameters used when a BSC device sends a backscattered signal or whether to perform joint channel estimation on a first signal; and determining, by the UE based on the first target information, whether to perform the joint channel estimation on the first signal; where the backscattered signal is obtained by the BSC device by modulating the first signal.

## Description

This application claims priority to Chinese Patent Application No. 202111619639.4, filed with the China National Intellectual Property Administration on December 27, 2021 and entitled "CHANNEL ESTIMATION METHOD AND APPARATUS, TERMINAL, NETWORK-SIDE DEVICE, AND MEDIUM", which is incorporated herein by reference in its entirety.

### TECHNICAL FIELD

This application pertains to the field of communication technologies, and specifically relates to a channel estimation method and apparatus, a terminal, a network-side device, and a medium.

### BACKGROUND

At present, in backscatter communication (BackScatter Communication, BSC), a BSC device can modulate a radio frequency signal sent by another device to generate a backscattered signal associated with the radio frequency signal. The backscattered signal carries data information from the BSC device, so a receiving device can demodulate the backscattered signal to obtain the data information.

However, due to the fact that the radio frequency signal may be sent toward user equipment (User Equipment, UE), there may be a situation in which channel estimation performed by the UE on the radio frequency signal is affected by the backscattered signal associated with the radio frequency signal, and thus, the performance of the channel estimation may be affected. As a result, the performance of the UE in demodulating radio frequency signals is reduced.

### SUMMARY

Embodiments of this application provide a channel estimation method and apparatus, a terminal, a network-side device, and a medium, so as to solve the problem of low performance of UE in demodulating radio frequency signals.

According to a first aspect, a channel estimation method is provided, applied to UE. The method includes: receiving, by the UE from a communication device, first target information, where the first target information is used to indicate: parameters used when a BSC device sends a backscattered signal or whether to perform joint channel estimation on a first signal; and determining, by the UE based on the first target information, whether to perform the joint channel estimation on the first signal; where the backscattered signal is obtained by the BSC device by modulating the first signal.

According to a second aspect, a channel estimation apparatus is provided, where the channel estimation apparatus is a first channel estimation apparatus, and the first channel estimation apparatus includes a receiving module and a determining module. The receiving module is configured to receive first target information from a second channel estimation apparatus, where the first target information is used to indicate: parameters used when a BSC device sends a backscattered signal or whether to perform joint channel estimation on a first signal. The determining module is configured to determine, based on the first target information received by the receiving module, whether to perform the joint channel estimation on the first signal; where the backscattered signal is obtained by the BSC device by modulating the first signal.

According to a third aspect, a channel estimation method is provided, applied to a communication device. The method includes: sending, by the communication device, first target information to UE, where the first target information is used to indicate: parameters used when a BSC device sends a backscattered signal or whether to perform joint channel estimation on a first signal. The backscattered signal is obtained by the BSC device by modulating the first signal; and the first target information is used by the UE to determine whether to perform the joint channel estimation on the first signal.

According to a fourth aspect, a channel estimation apparatus is provided, where the channel estimation apparatus is a second channel estimation apparatus, and the second channel estimation apparatus includes a sending module. The sending module is configured to send first target information to a first channel estimation apparatus, where the first target information is used to indicate: parameters used when a BSC device sends a backscattered signal or whether to perform joint channel estimation on a first signal. The backscattered signal is obtained by the BSC device by modulating the first signal; and the first target information is used by the UE to determine whether to perform the joint channel estimation on the first signal.

According to a fifth aspect, a terminal is provided. The terminal includes a processor and a memory, where the memory stores a program or instructions capable of running on the processor. When the program or the instructions are executed by the processor, the steps of the method according to the first aspect are implemented, or the steps of the method according to the third aspect are implemented.

According to a sixth aspect, a terminal is provided, including a processor and a communication interface. The communication interface is configured to receive first target information from a communication device, where the first target information is used to indicate: parameters used when a BSC device sends a backscattered signal or whether to perform joint channel estimation on a first signal. The processor is configured to determine, based on the first target information, whether to perform the joint channel estimation on the first signal; where the backscattered signal is obtained by the BSC device by modulating the first signal.

According to a seventh aspect, a network-side device is provided. The network-side device includes a processor and a memory. The memory stores a program or instructions capable of running on the processor. When the program or instructions are executed by the processor, the steps of the method according to the third aspect are implemented.

According to an eighth aspect, a network-side device is provided, including a processor and a communication interface. The communication interface is configured to send first target information to UE, where the first target information is used to indicate: parameters used when a BSC device sends a backscattered signal or whether to perform joint channel estimation on a first signal. The backscattered signal is obtained by the BSC device by modulating the first signal; and the first target information is used by the UE to determine whether to perform the joint channel estimation on the first signal.

According to a ninth aspect, a channel estimation system is provided, including a terminal and a network-side device. The terminal may be configured to execute the steps of the method according to the first aspect, and the network-side device may be configured to execute the steps of the method according to the third aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor, and the processor is configured to run a program or instructions to implement the method according to the first aspect or to implement the steps of the method according to the third aspect.

According to a twelfth aspect, a computer program/program product is provided. The computer program/program product is stored in a storage medium, and the computer program/program product is executed by at least one processor so as to implement the steps of the method according to the first aspect or to implement the steps of the method according to the third aspect.

In the embodiments of this application, UE may receive, from a communication device, first target information that is used to indicate parameters used when a BSC device sends a backscattered signal (or whether to perform joint channel estimation on a first signal). The backscattered signal is obtained by the BSC device by modulating the first signal. In this way, the UE can determine, based on the first target information, whether to perform the joint channel estimation on the first signal. Since the UE can determine, based on the parameters used when the BSC device sends a backscattered signal (or whether to perform joint channel estimation on the first signal) as indicated by the communication device, whether to perform the joint channel estimation on the first signal, instead of directly performing the joint channel estimation on the first signal, the joint channel estimation on the first signal performed by the UE can be prevented from being affected by the backscattered signal associated with the first signal. Therefore, it is possible to avoid affecting the performance of channel estimation and improve the performance of the UE in demodulating radio frequency signals.

### BRIEF DESCRIPTION OF DRAWINGS

FIG. 1 is a first block diagram of a wireless communication system according to an embodiment of this application;
FIG. 2 is a second block diagram of a wireless communication system according to an embodiment of this application;
FIG. 3 is a first schematic diagram of a relationship between a transmission duration of each bit from a BSC device and a length of a slot/subframe of a radio frequency signal;
FIG. 4 is a second schematic diagram of a relationship between a transmission duration of each bit from a BSC device and a length of a slot/subframe of a radio frequency signal;
FIG. 5 is a third schematic diagram of a relationship between a transmission duration of each bit from a BSC device and a length of a slot/subframe of a radio frequency signal;
FIG. 6 is a first schematic flowchart of a channel estimation method according to an embodiment of this application;
FIG. 7 is a second schematic flowchart of a channel estimation method according to an embodiment of this application;
FIG. 8 is a third schematic flowchart of a channel estimation method according to an embodiment of this application;
FIG. 9 is a fourth schematic flowchart of a channel estimation method according to an embodiment of this application;
FIG. 10 is a first schematic structural diagram of a channel estimation apparatus according to an embodiment of this application;
FIG. 11 is a second schematic structural diagram of a channel estimation apparatus according to an embodiment of this application;
FIG. 12 is a schematic structural diagram of a communication device according to an embodiment of this application;
FIG. 13 is a schematic diagram of a hardware structure of a terminal according to an embodiment of this application; and
FIG. 14 is a schematic diagram of a hardware structure of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The following describes the terms used in the embodiments of this application.

### 1. BSC

BSC refers to a process in which a BSC device modulates radio frequency signals from other devices (for example, UEs and network-side devices) or environments to carry data information of the BSC device on the radio frequency signals.

The BSC device can adjust its internal impedance to control the circuit reflection coefficient of the BSC device, thereby changing the amplitude, frequency, phase, and the like of the radio frequency signals to implement modulation of the radio frequency signals.

The BSC device may be a tag (Tag) in a radio frequency identification (Radio Frequency Identification, RFID) system, or a passive (Passive) internet of things (Internet of Things, IOT) unit, or an active (Semi-Passive) IOT unit, or a reconfigurable intelligent meta-surface (Reconfigurable Intelligent meta-Surface, RIS) unit in an intelligent hypersurface, or the like.

### 2. Backscattered signal

A signal generated after the BSC device modulates a radio frequency signal is a backscattered signal associated with the radio frequency signal.

### 3. Other terms

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more pieces of first target information. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

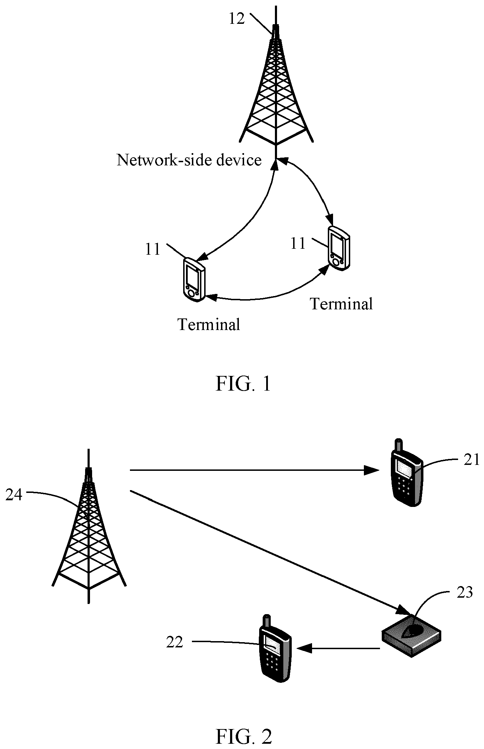

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in this embodiment of this application. The network-side device 12 can include an access network device or core network device, where the access network device can also be referred to as a radio access network device, radio access network (Radio Access Network, RAN), radio access network function, or radio access network unit. The access network device may include a base station, a WLAN access point, a Wi-Fi node, or the like. The base station may be referred to as NodeB, evolved NodeB (eNB), access point, base transceiver station (Base Transceiver Station, BTS), radio base station, radio transceiver, basic service set (Basic Service Set, BSS), extended service set (Extended Service Set, ESS), home NodeB, home evolved NodeB, transmitting receiving point (Transmitting Receiving Point, TRP), or other appropriate terms in the art. As long as the same technical effects are achieved, the base station is not limited to any specific technical term. It should be noted that in the embodiments of this application, only the base station in the NR system is used as an example for description, and the specific type of the base station is not limited.

The following describes in detail a channel estimation method and apparatus, a terminal, a network-side device, and a medium provided in the embodiments of this application by using some embodiments and application scenarios thereof with reference to the accompanying drawings.

A channel estimation method provided in an embodiment of this application may be applied to a BSC scenario.

FIG. 2 is a block diagram of a wireless communication system to which embodiments of this application are applicable. The wireless communication system includes UE21, UE22, a BSC device 23, and other devices (for example, a network-side device 24).

As shown in FIG. 2, it is assumed that the network-side device 24 needs to send data information to UE21, the network-side device 24 can send a radio frequency signal to UE21, where the radio frequency signal carries the data information that the network-side device 24 needs to send, so that UE21 can receive the data information that the network-side device 24 needs to send; and the BSC device 23 can modulate the data information that the BSC device 23 needs to send onto the radio frequency signal to generate a backscattered signal associated with the radio frequency signal, so that UE22 can receive the data information that the BSC device 23 needs to send. However, since there may be a situation in which the channel estimation performed by UE21 on the radio frequency signal is affected by the backscattered signal associated with the radio frequency signal, the performance of the channel estimation may be affected.

The following three examples illustrate how the backscattered signal affects the performance of channel estimation performed by UE.

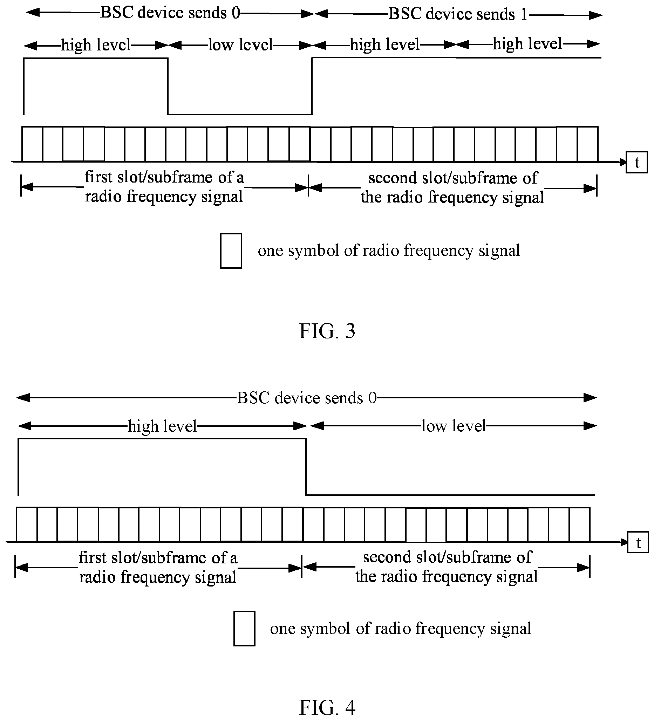

In an example, as shown in FIG. 3, it is assumed that the transmission duration of each bit from the BSC device 23 is equal to the length of one slot/subframe of a radio frequency signal, so that the BSC device 23 occupies one slot of the radio frequency signal when sending 0. According to the principle of amplitude shift keying (Amplitude Shift Keying, ASK) modulation based on FM0 coding, for example, when the BSC device 23 sends 0, the first half of the slot is at a high level, and the second half of the slot is at a low level; and when the BSC device 23 sends 1, the entire slot is at a high level. Therefore, channel estimation interpolation performed by UE21 within one slot of the radio frequency signal is affected by a backscattered signal associated with the radio frequency signal, resulting in discontinuity in the amplitude of the reference signal between the first half of the slot and the second half of the slot, thereby affecting the performance of channel estimation.

In another example, as shown in FIG. 4, it is assumed that the transmission duration of each bit from the BSC device 23 is greater than the length of one slot/subframe of a radio frequency signal, for example, the transmission duration of each bit from the BSC device 23 is two slots/subframes of the radio frequency signal, so that the BSC device 23 occupies two slots of the radio frequency signal when sending 0. According to the principle of ASK modulation based on FM0 coding, for example, when the BSC device 23 sends 0, the first slot is at a high level, and the second slot is at a low level. Therefore, joint channel estimation performed by UE21 within two slots of the radio frequency signal is affected by a backscattered signal associated with the radio frequency signal, resulting in discontinuity in the amplitude of the reference signal at the junction of two slots, thereby affecting the performance of channel estimation.

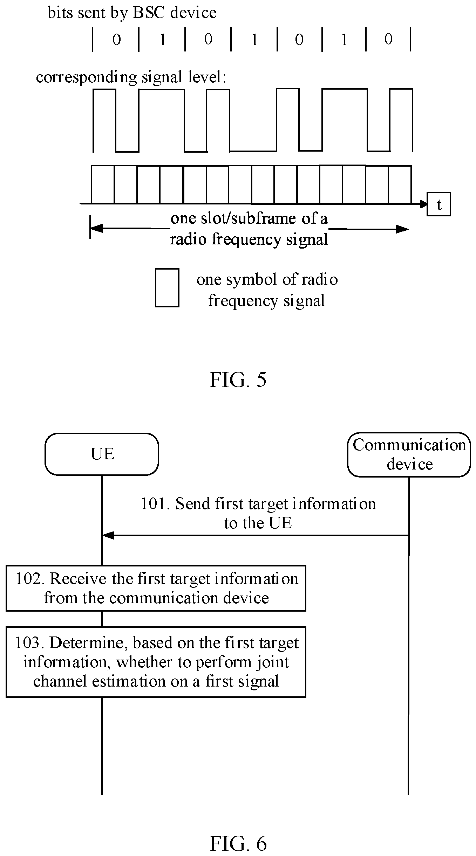

In still another example, as shown in FIG. 5, it is assumed that the transmission duration of each bit from the BSC device 23 is less than the length of one slot/subframe of a radio frequency signal, for example, the transmission duration of each bit from the BSC device 23 is two symbols of the radio frequency signal, so that the BSC device 23 occupies two symbols of the radio frequency signal when sending 0. According to the principle of ASK modulation based on FM0 coding, for example, when the BSC device 23 sends 0, the two symbols are at different levels; and when the BSC device 23 sends 1, the two symbols are at a same level. Therefore, joint channel estimation performed by UE21 within one slot of the radio frequency signal is affected by a backscattered signal associated with the radio frequency signal, resulting in discontinuity in the amplitude of the reference signal of the two symbols, thereby affecting the performance of channel estimation.

In summary, the channel estimation performed by UE on the radio frequency signal may be affected by the backscattered signal associated with the radio frequency signal, which may affect the performance of the channel estimation.

However, in embodiments of this application, UE21 may receive indication information from a communication device (for example, a network-side device, another UE, or a BSC device), where the indication information is used to indicate parameters used when the BSC device 23 sends a backscattered signal (or whether to perform joint channel estimation on the radio frequency signal), so that the UE21 can determine, directly based on the indication information, whether to perform the joint channel estimation on the radio frequency signal instead of directly performing the joint channel estimation on the radio frequency signals. Therefore, it is possible to avoid affecting the performance of channel estimation.

FIG. 6 is a flowchart of a channel estimation method according to an embodiment of this application. As shown in FIG. 6, the channel estimation method provided in this embodiment of this application may include the following steps 101 to 103.

Step 101: A communication device sends first target information to UE.

Step 102: The UE receives the first target information from the communication device.

In this embodiment of this application, the first target information is used to indicate parameters used when a BSC device sends a backscattered signal or whether to perform joint channel estimation on a first signal. The backscattered signal is obtained by the BSC device by modulating the first signal. The first target information is used by the UE to determine whether to perform the joint channel estimation on the first signal.

Optionally, in this embodiment of this application, the communication device includes any one of the following: a base station, the BSC device, and another UE.

Further optionally, in this embodiment of this application, in a case that the communication device is a base station, the base station may be any one of the following: another UE, a relay (relay) device, a device to device (Device to Device, D2D) device, a sidelink (sidelink) device, and the like.

Further optionally, in this embodiment of this application, in a case that the communication device is a BSC device, the BSC device may alternatively be a RIS device. The power source and radio frequency source (that is, the first signal) for the BSC device can either be a same device or different devices.

A power supplying method for the BSC device may include at least one of the following: the BSC device being powered by radio frequency signals from a base station, the BSC device being powered by other radio frequency signals, and the BSC device being powered by non-radio-frequency signals. Being powered by non-radio-frequency signals may include at least one of: powered by mechanics, powered by vibration, powered by solar, powered by heat, and the like.

Optionally, in this embodiment of this application, in a case that the communication device is a base station, the base station can send the first target information to the UE by having the first target information carried on downlink control information (Downlink Control Information, DCI), a preamble code sequence, radio resource control (Radio Resource Control, RRC) signaling, or a media access control (Media Access Control, MAC) control element (Control Element, CE).

Optionally, in this embodiment of this application, in a case that the communication device is a BSC device (or another UE), the BSC device (or another UE) can send the first target information to the UE by having the first target information carried on sidelink control information (Sidefink Control Information, SCI) or a preamble code sequence.

Optionally, in this embodiment of this application, the first signal may be a signal, data, or the like sent by the communication device to the UE. In this case, the first target information may be carried in scheduling signaling (for example, DCI) of the first signal.

Optionally, in this embodiment of this application, in a case that the first target information is used to indicate parameters used when the BSC device sends a backscattered signal, the parameters may include at least one of the following: a time-domain parameter, a frequency-domain parameter, and the like. The parameters can specifically be sent by the BSC device to the communication device. It can be understood that before the BSC device sends a backscattered signal, the BSC device can report the parameters to the communication device.

Optionally, in this embodiment of this application, in a case that the first target information is used to indicate whether to perform joint channel estimation on a first signal, the first target information is determined by the communication device based on the parameters used when the BSC device sends a backscattered signal, where the parameters can specifically be sent by the BSC device to the communication device.

The following will provide examples to illustrate the first target information.

Optionally, in a possible implementation of this embodiment of this application, the first target information is used to indicate parameters used when a BSC device sends a backscattered signal. The parameters used when a BSC device sends a backscattered signal include at least one of the following:
target time information, where the target time information is used to indicate information about a time when the BSC device sends a backscattered signal;
at least one cycle length of the backscattered signal;
a symbol length of the backscattered signal;
a transmission duration of the backscattered signal;
a modulation mode of the backscattered signal;
a coding mode of the backscattered signal;
a length of a delimiter for the backscattered signal;
a time offset of the delimiter;
a length of a preamble of the backscattered signal;
a time offset of the preamble;
information related to synchronization of the BSC device;
information related to frequency shifting of the first signal by the BSC device; and
a target duration.

Optionally, in this embodiment of this application, the target time information is specifically used to indicate a possible time period in which the BSC device sends the backscattered signal.

Optionally, in this embodiment of this application, the target time information includes at least one of the following:
first time information, where the first time information includes at least one of aperiodic transmission mode information and aperiodic transmission time information; and
second time information, where the second time information includes at least one of periodic transmission mode information, a transmission cycle, and periodic transmission time information.

The aperiodic transmission time information may specifically be a possible time period for aperiodic transmission, for example, from 4:00 to 5:00 in the morning.

The transmission cycle can specifically be a duration of one transmission cycle (for example, a transmission cycle of 10 milliseconds (ms)), where one cycle includes a signal transmission time (for example, 5 ms) of a backscattered signal and a time (for example, 5 ms) without signal transmission. During the time when the BSC device does not transmit signals, the BSC device can perform energy collection.

The periodic transmission time information may specifically be a possible time period for periodic transmission, for example, cycles in which information is likely to be transmitted.

Optionally, in this embodiment of this application, each cycle length in at least one cycle length of the backscattered signal may be at least one of a length of a subframe or slot, number of symbols contained in one subframe or slot, and the like.

Optionally, in this embodiment of this application, the symbol length of the backscattered signal may be a time length occupied by the BSC device sending 0 or 1, for example, one subframe or slot occupied for sending 0 or 1.

Optionally, in this embodiment of this application, the transmission duration of the backscattered signal may specifically be a cycle length for transmission of the backscattered signal. It can be understood that the UE needs to cache the backscattered signal for that transmission duration before demodulation can be performed.

Optionally, in this embodiment of this application, the modulation mode of the backscattered signal may be a modulation mode based on FM0 coding.

Optionally, in this embodiment of this application, the coding mode of the backscattered signal may be Miller (Miller) coding, Manchester coding, FM0 coding, and the like. The coding mode determines the smallest time granularity for high-low level shift within one symbol.

In this embodiment of application, the delimiter is used to indicate a starting moment of the backscattered signal; and the preamble is used for synchronization or channel estimation by a receiving device of the backscattered signal.

Optionally, in this embodiment of this application, the information related to synchronization of the BSC device includes at least one of the following:
a symbol or slot starting moment for the backscattered signal; and
deviation information between a timing of the BSC device and a target timing, where the target timing includes any one of the following: a timing of the first signal and a timing of the communication device.

Further optionally, in this embodiment of this application, the symbol or slot starting moment for the backscattered signal may specifically be an absolute moment or a relative moment.

For example, it is assumed that the starting moment is T1. In a case that the starting moment is an absolute moment, the symbol or slot starting moment for the backscattered signal is T1.

In a case that the starting moment is a relative moment, the symbol or slot starting moment for the backscattered signal may be a moment that is T1 before (or after) the target moment, where the target moment may be a symbol or slot starting moment for the first signal.

Optionally, in this embodiment of this application, the information related to frequency shifting of the first signal by the BSC device includes at least one of the following:
whether frequency shifting is supported or not;
a center frequency after frequency shifting; and
a bandwidth after frequency shifting.

In this embodiment of this application, the target duration is a minimum duration during which amplitude and phase of the backscattered signal remain unchanged.

Optionally, in this embodiment of this application, the minimum duration during which the amplitude and phase of the backscattered signal remain unchanged may specifically be an absolute value or a length of a time unit, where the time unit may be any one of the following: slot, subframe, symbol, micro-slot, mini-slot, and the like.

For example, the minimum duration during which the amplitude and phase of the backscattered signal remain unchanged may be 1 ms, or a symbol length of at least two first signals, or a subframe or slot length of at least two first signals.

Optionally, in another possible implementation of this embodiment of this application, the first target information is used to indicate whether to perform joint channel estimation on a first signal. The first target information includes at least one of the following:
first indication information, where the first indication information is used to indicate that the UE is not to perform the joint channel estimation within M time units on the first signal;
second indication information, where the second indication information is used to indicate that the UE is to perform the joint channel estimation within the M time units on the first signal;
third indication information, where the third indication information is used to indicate that the UE is not to perform the joint channel estimation within T symbols on the first signal;
fourth indication information, where the fourth indication information is used to indicate that the UE is to perform the joint channel estimation within the T symbols on the first signal; and
fifth indication information, where the fifth indication information is used to indicate that the UE is to perform the joint channel estimation within R time units on the first signal.

In this embodiment of this application, the T symbols are symbols within one time unit, M and T are both positive integers greater than 1, and R is a decimal greater than 0 and less than 1.

Further optionally, in this embodiment of this application, R may specifically be a decimal greater than 0.5 and less than 1. For example, R may be 0.6, 0.75, or the like.

In this embodiment of this application, the parameters used when the BSC device sends a backscattered signal can be pre-configured in the communication device, or the communication device can obtain from another device (for example, the BSC device or another UE) in advance the parameters used when the BSC device sends a backscattered signal, so that the communication device can send the first target information to the UE based on the parameters. An example is given below for describing how a communication device obtains parameters used when a BSC device sends a backscattered signal.

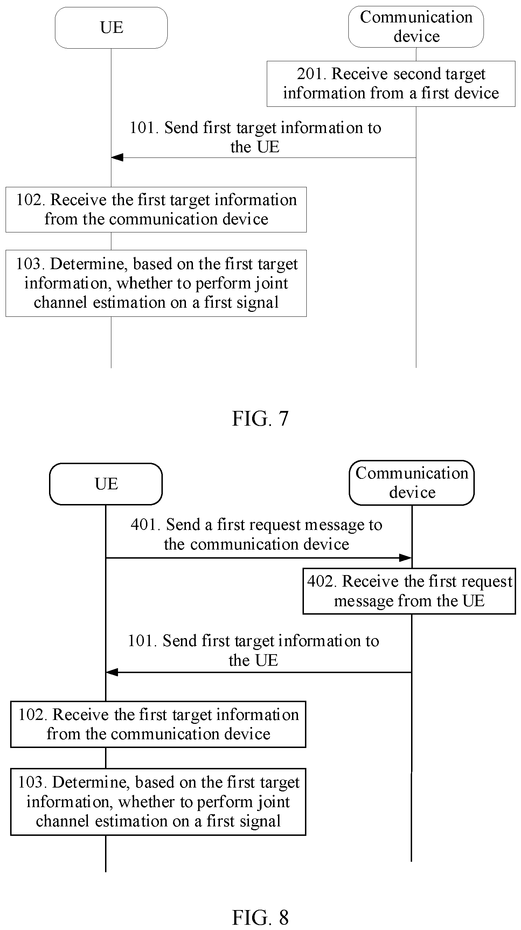

Optionally, in this embodiment of this application, with reference to FIG. 6, as shown in FIG. 7, before step 101, the channel estimation method provided in this embodiment of this application may further include the following step 201.

Step 201. The communication device receives second target information from a first device.

In this embodiment of this application, the second target information is used to indicate parameters used when the BSC device sends the backscattered signal; the first target information is determined based on second target information; and the first device includes any one of the following: the BSC device and another UE.

In this embodiment of this application, the first target information is determined by the communication device based on the second target information. It can be understood that the content indicated by the second target information is a subset or full set of the content indicated by the first target information.

Further optionally, in this embodiment of this application, in a case that a connection is established between the communication device and the first device, the communication device can receive the second target information from the first device.

In a case that the first device includes another UE, the parameters used when the BSC device sends a backscattered signal is reported by the BSC device to the another UE before the BSC device sends the signal.

Further optionally, in this embodiment of this application, the communication device may be a base station.

In this embodiment of this application, since the backscattered signal sent by the BSC device may affect the performance of channel estimation performed by the UE, the communication device can receive the parameters used when the BSC device sends the backscattered signal from the BSC device (or another UE).

Therefore, it can be known that since the communication device can receive the parameters used when the BSC device sends the backscattered signal directly from the BSC device (or another UE), the communication device can accurately determine the parameters for the backscattered signal or accurately determine whether the UE is to perform joint channel estimation on the first signal. This allows the UE to accurately determine whether to perform joint channel estimation on the first signal. Therefore, it is possible to avoid affecting the performance of channel estimation performed by the UE.

Optionally, in this embodiment of this application, before step 201, the channel estimation method provided in this embodiment of this application may further include the following step 301.

Step 301: The communication device sends a fifth request message to a first device.

In this embodiment of this application, the fifth request message is used to request for the parameters used when the BSC device sends the backscattered signal.

Further optionally, in this embodiment of this application, in a case that a connection is established between the communication device and the first device, the communication device can send the fifth request message to the first device.

Therefore, it can be known that since the communication device can directly request the first device for the parameters used when the BSC device sends a backscattered signal, a situation that the BSC device (or another UE) cannot send the parameters to the communication device due to a network quality problem can be avoided, and therefore, a situation that the communication device cannot obtain the parameters can be avoided.

Step 103. The UE determines, based on the first target information, whether to perform the joint channel estimation on the first signal.

Optionally, in this embodiment of this application, after the UE determines whether to perform the joint channel estimation on the first signal, if the UE determines to perform the joint channel estimation on the first signal, the UE may further determine, based on the first target information, a manner of performing the joint channel estimation, so as to perform the joint channel estimation on the first signal in that manner.

It should be noted that the joint channel estimation in this embodiment of this application (including all embodiments) mainly refers to interpolation in channel estimation, including time-domain interpolation. For example, through estimation of channel responses or channel state information on reference signal resource elements (Resource element, RE) at two different moments, channel responses or channel state information on other REs at the two moments or on REs at other moments are obtained.

For descriptions of joint channel estimation, reference may be made to specific descriptions in the related art, which will not be described in detail in this embodiment of this application.

The following will specifically illustrate two different examples.

Example 1. First target information is used to indicate parameters used when a BSC device sends a backscattered signal.

Optionally, in this embodiment of this application, the first target information includes a target duration. Specifically, step 103 may be implemented through the following step 103a.

Step 103a. The UE determines to perform the joint channel estimation during the target duration in a case that a target time-frequency resource used by the BSC device to send the backscattered signal overlaps with a time-frequency resource of the first signal.

In this embodiment of this application, the target time-frequency resource is determined based on the first target information.

Further optionally, in this embodiment of this disclosure, the target time-frequency resource may include a first time-domain resource and a first frequency-domain resource. The first time-domain resource is used to indicate a possible time period in which the BSC device sends the backscattered signal.

It should be noted that "the target time-frequency resource overlapping with the time-frequency resources of the first signal" can be understood as totally overlapping or partially overlapping, which is not limited in this embodiment of this application.

It can be understood that in a case that the possible time period in which the BSC device sends the backscattered signal overlaps with the time-frequency resource of the first signal, and that the first frequency-domain resource used by the BSC device to send the backscattered signal overlaps with a frequency-domain resource of the first signal, the UE determines to perform the joint channel estimation.

In this embodiment of this application, if the target time-frequency resource used by the BSC device to send the backscattered signal overlaps with the time-frequency resource of the first signal, it can be assumed that a discontinuity in the amplitude of the signal may occur when the joint channel estimation is performed on the first signal. Therefore, the UE performs the joint channel estimation in the minimum duration during which the amplitude and phase of the backscattered signal remain unchanged, to prevent the joint channel estimation from being affected by the backscattered signal and thereby avoid the discontinuity in the amplitude of the signal.

Therefore, it can be known that since the UE can perform the joint channel estimation during the target duration in a case that the target time-frequency resource used by the BSC device to send the backscattered signal overlaps with the time-frequency resource of the first signal, it is possible to avoid the discontinuity in the amplitude of the signal and thus avoid affecting the performance of channel estimation.

Optionally, in this embodiment of this application, step 103a may be specifically implemented through the following step 103a1.

Step 103a1. In a case that a target time-frequency resource used by the BSC device to send the backscattered signal overlaps with a time-frequency resource of the first signal and that the target duration is greater than or equal to a length of N time units of the first signal, the UE determines to perform the joint channel estimation within the N time units during the target duration.

In this embodiment of this application, N is a positive integer.

Further optionally, in this embodiment of this application, N may specifically be 1.

Further optionally, in this embodiment of this application, the time unit may specifically be slot or subframe.

In this embodiment of this application, if the target duration is greater than or equal to the length of the N time units of the first signal, it can be assumed that the amplitude and phase of the backscattered signal are invariant within the length of the N time units, which means that the joint channel estimation performed on the first signal within the N time units is not affected by the backscattered signal, and therefore, the UE can perform the joint channel estimation within the N time units.

It can be understood that the UE can determine a manner of performing the joint channel estimation based on the target duration and the length of the time units of the first signal.

Optionally, in this embodiment of this application, step 103a1 may alternatively be replaced with the following step 103a2.

Step 103a2. In a case that a target time-frequency resource used by the BSC device to send the backscattered signal overlaps with a time-frequency resource of the first signal and that the target duration is less than a length of N time units of the first signal, the UE determines not to perform the joint channel estimation within the N time units during the target duration.

Further optionally, in this embodiment of this application, in a case that the target duration is less than the length of N time units of the first signal and greater than or equal to a length of X time units of the first signal, the UE may determine to perform joint channel estimation within the X time units during the target duration, X being a positive integer less than N.

In this embodiment of this application, if the target duration is less than the length of the N time units of the first signal, it can be assumed that the amplitude and phase of the backscattered signal are likely to change within the length of the N time units, which means that the joint channel estimation performed on the first signal within the N time units may be affected by the backscattered signal, and therefore, the UE may not perform the joint channel estimation within the N time units.

Optionally, in this embodiment of this application, in a case that the target time-frequency resource used by the BSC device to send the backscattered signal does not overlap with the time-frequency resource of the first signal, the UE determines to perform joint channel estimation on the first signal.

In this embodiment of this application, if the target time-frequency resource used by the BSC device to send the backscattered signal does not overlap with the time-frequency resource of the first signal, it can be assumed that the backscattered signal does not affect the performance of the joint channel estimation on the first signal, so the UE can directly perform joint channel estimation on the first signal.

Example 2. The first target information is used to indicate whether to perform joint channel estimation on the first signal.

Optionally, in this embodiment of this application, step 103 may be specifically implemented through the following step 103b, step 103c, step 103d, step 103e, or step 103f.

Step 103b. In a case that the first target information includes the first indication information, the UE determines not to perform the joint channel estimation within the M time units on the first signal.

Step 103c. In a case that the first target information includes the second indication information, the UE determines to perform joint channel estimation within the M time units on the first signal.

Step 103d. In a case that the first target information includes the third indication information, the UE determines not to perform the joint channel estimation within the T symbols on the first signal.

Step 103e. In a case that the first target information includes the fourth indication information, the UE determines to perform the joint channel estimation within the T symbols on the first signal.

Step 103f. In a case that the first target information includes the fifth indication information, the UE determines to perform the joint channel estimation within the R time units on the first signal.

It can be understood that the UE may perform joint channel estimation on the first signal in a manner indicated by the first target information, or may not perform joint channel estimation in a manner indicated by the first target information.

In the channel estimation method provided in this embodiment of this application, UE may receive, from a communication device, first target information that is used to indicate parameters used when a BSC device sends a backscattered signal (or whether to perform joint channel estimation on a first signal). The backscattered signal is obtained by the BSC device by modulating the first signal. In this way, the UE can determine, based on the first target information, whether to perform the joint channel estimation on the first signal. Since the UE can determine, based on the parameters used when the BSC device sends a backscattered signal (or whether to perform joint channel estimation on the first signal) as indicated by the communication device, whether to perform the joint channel estimation on the first signal, instead of directly performing the joint channel estimation on the first signal, the joint channel estimation on the first signal performed by the UE can be prevented from being affected by the backscattered signal associated with the first signal. Therefore, it is possible to avoid affecting the performance of channel estimation and improve the performance of the UE in demodulating radio frequency signals.

In this embodiment of this application, the UE may receive the first target information from the communication device in a variety of different situations. Details are as follows.

### Case 1

The UE may receive the first target information directly from the communication device in a case that a connection with the communication device is established.

### Case 2

The UE may send a request to the communication device so that the communication device can send the first target information to the UE. The following provides description by using an example in which the first target information is used to indicate parameters used when a BSC device sends a backscattered signal.

Optionally, in this embodiment of this application, with reference to FIG. 6, as shown in FIG. 8, before step 101, the channel estimation method provided in this embodiment of this application may further include the following step 401 and step 402.

Step 401. UE sends a first request message to a communication device.

Step 402. The communication device receives the first request message from the UE.

In this embodiment of this application, the first request message is used to request for the parameters used when the BSC device sends the backscattered signal.

It can be understood that the communication device can directly send first target information to the UE according to the first request message.

Optionally, in this embodiment of this application, before step 401, the channel estimation method provided in this embodiment of this application may further include the following step 501.

Step 501. The UE sends the first request message to the communication device in a case that the UE determines that a received signal is associated with the backscattered signal.

Further optionally, in this embodiment of this application, the UE may check the received signal to determine whether the amplitude of the signal experiences periodic discontinuities (for example, periodic jumps) in different time units (for example, different slots), to determine whether the signal is associated with a backscattered signal. If the amplitude of the signal experiences periodic discontinuities (for example, periodic jumps) in different time units (for example, different slots), it can be determined that the signal is associated with a backscattered signal, which means that the BSC device modulates its information onto the signal.

In this embodiment of this application, if the UE determines that a received signal is associated with the backscattered signal, it can be assumed that joint channel estimation on the first signal may be affected by the backscattered signal associated with the first signal, affecting the performance of channel estimation performed by the UE. Therefore, the UE can request the communication device for the parameters used when the BSC device sends a backscattered signal.

It should be noted that for the case that the first target information is used to indicate whether to perform joint channel estimation on the first signal, reference may be made to the descriptions in the foregoing embodiments, and details are not repeated herein in this embodiment of this application.

Case 3

The UE may check, based on the request from the communication device, whether the UE satisfies a preset condition (for example, whether the signal received by the UE is associated with the backscattered signal) and, in a case that it is determined that the signal received by the UE is associated with the backscattered signal, the UE may send a request to the communication device so that the communication device can send the first target information to the UE. The following provides description by using an example in which the first target information is used to indicate parameters used when a BSC device sends a backscattered signal.

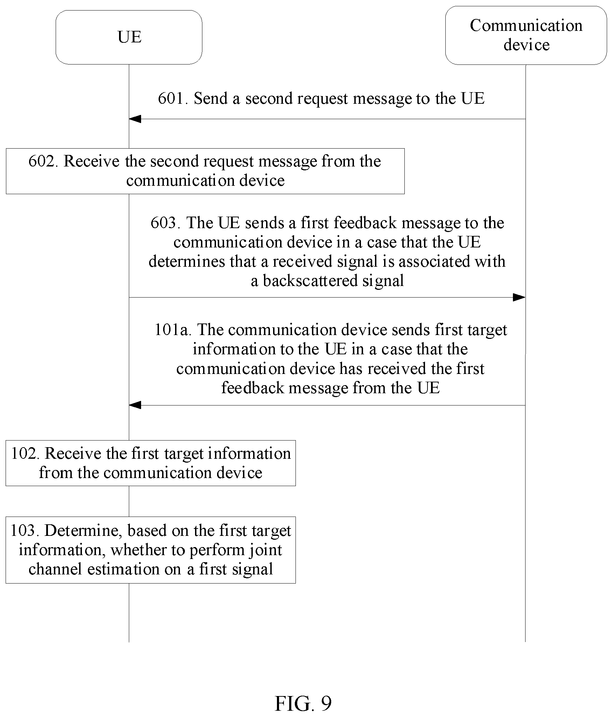

Optionally, in this embodiment of this application, with reference to FIG. 6, as shown in FIG. 9, before step 101, the channel estimation method provided in this embodiment of this application may further include the following step 601 to step 603, and step 101 may be specifically implemented through the following step 101a.

Step 601: The communication device sends a second request message to the UE.

Step 602: The UE receives the second request message from the communication device.

In this embodiment of this application, the second request message is used to request the UE to determine whether a received signal is associated with the backscattered signal.

It should be noted that for a case in which the UE determines whether a received signal is associated with the backscattered signal, reference may be made to the specific descriptions in the foregoing embodiments, and details are not repeated herein in this embodiment of this application.

Optionally, in this embodiment of this application, the second request message includes at least one of the following:
a third request message, where the third request message is used to request the UE to determine whether a signal received on a target resource is associated with the backscattered signal, the target resource including at least one of the following: a target time-domain resource and a target frequency-domain resource; and
a fourth request message, where the fourth request message is used to request the UE to determine whether target sequence information has been received, the target sequence information being associated with an identity of the BSC device or being related to a scrambling sequence of the backscattered signal.

Further optionally, in this embodiment of this application, an identity of the BSC device may specifically be a device identity document (Identity Document, ID) of the BSC device.

Step 603. The UE sends a first feedback message to the communication device in a case that the UE determines that the received signal is associated with the backscattered signal.

In this embodiment of this application, the first feedback message is used to indicate that the signal received by the UE is associated with the backscattered signal.

In this embodiment of this application, the first target information is sent by the communication device in a case that the communication device has received the first feedback message.

Step 101a. The communication device sends the first target information to the UE in a case that the communication device has received the first feedback message from the UE.

It should be noted that for the case that the first target information is used to indicate whether to perform joint channel estimation on the first signal, reference may be made to the descriptions in the foregoing embodiments, and details are not repeated herein in this embodiment of this application.

Therefore, it can be known that since the UE can determine, according to the request from the communication device, whether a signal received by the UE is associated with the backscattered signal, the communication device sends the first target information to the UE only in a case that the UE determines that the received signal is associated with the backscattered signal. This allows the UE to determine whether to perform joint channel estimation, and therefore, the power consumption of the UE can be reduced.

The channel estimation method provided in this embodiment of this application can be executed by the UE (or the communication device). In this embodiment of this application, the channel estimation method being executed by the UE (or the communication device) is used as an example to describe the channel estimation method according to the embodiments of this application.

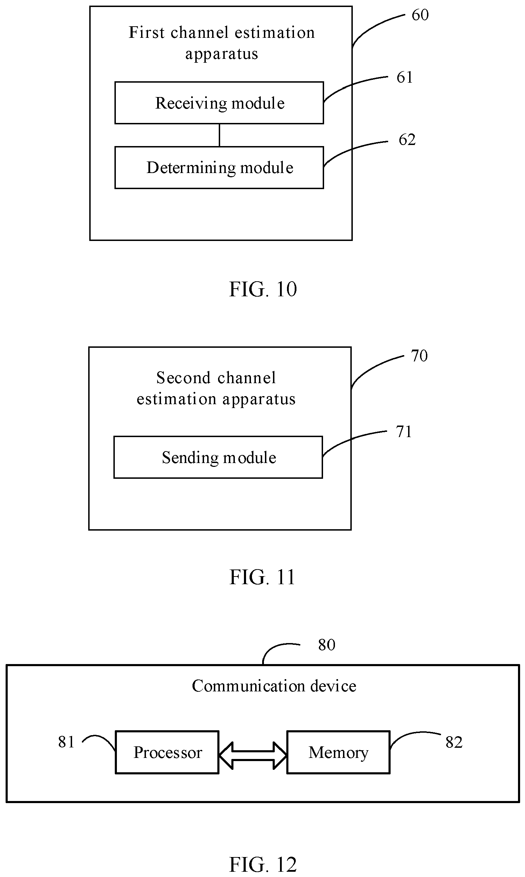

FIG. 10 is a possible schematic structural diagram of a channel estimation apparatus in an embodiment of this application, and the channel estimation apparatus is a first channel estimation apparatus. As shown in FIG. 10, the first channel estimation apparatus 60 may include a receiving module 61 and a determining module 62.

The receiving module 61 is configured to receive first target information from a second channel estimation apparatus, where the first target information is used to indicate: parameters used when a BSC device sends a backscattered signal or whether to perform joint channel estimation on a first signal. The determining module 62 is configured to determine, based on the first target information received by the receiving module 61, whether to perform the joint channel estimation on the first signal. The backscattered signal is obtained by the BSC device by modulating the first signal.

In a possible implementation, the first target information is used to indicate parameters used when a BSC device sends a backscattered signal. The parameters used when the BSC device sends the backscattered signal include at least one of the following: target time information, where the target time information is used to indicate time information about when the BSC device sends a backscattered signal; at least one cycle length of the backscattered signal; a symbol length of the backscattered signal; a transmission duration of the backscattered signal; a modulation mode of the backscattered signal; a coding mode of the backscattered signal; a length of a delimiter for the backscattered signal; a time offset of the delimiter; a length of a preamble of the backscattered signal; a time offset of the preamble; information related to synchronization of the BSC device; information related to frequency shifting of the first signal by the BSC device; and a target duration. The delimiter is used to indicate a starting moment of the backscattered signal; and the target duration is a minimum duration during which amplitude and phase of the backscattered signal remain unchanged.

In a possible implementation, the target time information includes any one of the following: first time information, where the first time information includes at least one of aperiodic transmission mode information and aperiodic transmission time information; and second time information, where the second time information includes at least one of periodic transmission mode information, a transmission cycle, and periodic transmission time information.

In a possible implementation, the information related to synchronization of the BSC device includes at least one of the following: a symbol or slot starting moment for the backscattered signal; and deviation information between a timing of the BSC device and a target timing, where the target timing includes any one of the following: a timing of the first signal and a timing of the second channel estimation apparatus.

In a possible implementation, the information related to frequency shifting of the first signal by the BSC device includes at least one of the following: whether frequency shifting is supported or not; a center frequency after frequency shifting; and a bandwidth after frequency shifting.

In a possible implementation, the first target information includes the target duration. The determining module 62 is specifically configured to determine to perform the joint channel estimation during the target duration, in a case that a target time-frequency resource used by the BSC device to send the backscattered signal overlaps with a time-frequency resource of the first signal. The target time-frequency resource is determined based on the first target information.

In a possible implementation, the determining module 62 is specifically configured to: in a case that the target duration is greater than or equal to a length of N time units of the first signal, determine to perform the joint channel estimation within the N time units during the target duration. The determining module 62 is further configured to: in a case that the target duration is less than a length of N time units of the first signal, determine not to perform the joint channel estimation within the N time units during the target duration, where N is a positive integer.

In a possible implementation, the first target information is used to indicate whether to perform joint channel estimation on a first signal. The first target information includes at least one of the following: first indication information, where the first indication information is used to indicate that the first channel estimation apparatus 60 is not to perform the joint channel estimation within M time units on the first signal; second indication information, where the second indication information is used to indicate that the first channel estimation apparatus 60 is to perform the joint channel estimation within the M time units on the first signal; third indication information, where the third indication information is used to indicate that the first channel estimation apparatus 60 is not to perform the joint channel estimation within T symbols on the first signal; fourth indication information, where the fourth indication information is used to indicate that the first channel estimation apparatus 60 is to perform the joint channel estimation within the T symbols on the first signal; and fifth indication information, where the fifth indication information is used to indicate that the first channel estimation apparatus 60 is to perform the joint channel estimation within R time units on the first signal. The T symbols are symbols within one time unit, M and T are both positive integers greater than 1, and R is a decimal greater than 0 and less than 1.

In a possible implementation, the determining module 62 is specifically configured to determine not to perform the joint channel estimation within the M time units on the first signal, in a case that the first target information includes the first indication information; or determine to perform the joint channel estimation within the M time units on the first signal, in a case that the first target information includes the second indication information; or determine not to perform the joint channel estimation within the T symbols on the first signal, in a case that the first target information includes the third indication information; or determine to perform the joint channel estimation within the T symbols on the first signal, in a case that the first target information includes the fourth indication information; or determine to perform the joint channel estimation within the R time units on the first signal, in a case that the first target information includes the fifth indication information.

In a possible implementation, the second channel estimation apparatus includes any one of the following: a base station, the BSC device, and another channel estimation apparatus.

In a possible implementation, the first target information is determined by the second channel estimation apparatus based on second target information. The second target information is used to indicate parameters used when the BSC device sends the backscattered signal; the second target information is sent by a first device to the second channel estimation apparatus, and the first device includes any one of the following: the BSC device and another channel estimation apparatus.

In a possible implementation, the first channel estimation apparatus further includes a sending module. The sending module is configured to send a first request message to the second channel estimation apparatus, where the first request message is used to request for the parameters used when the BSC device sends the backscattered signal.

In a possible implementation, the sending module is specifically configured to send the first request message to the second channel estimation apparatus in a case that the first channel estimation apparatus 60 determines that the received signal is associated with the backscattered signal.

In a possible implementation, the receiving module 61 is further configured to: receive a second request message from the second channel estimation apparatus, where the second request message is used to request the first channel estimation apparatus 60 to determine whether a received signal is associated with the backscattered signal; and send a first feedback message to the second channel estimation apparatus in a case that the first channel estimation apparatus 60 determines that the received signal is associated with the backscattered signal, where the first feedback message is used to indicate that the signal received by the first channel estimation apparatus 60 is associated with the backscattered signal; where the first target information is sent by the second channel estimation apparatus in a case that the second channel estimation apparatus has received the first feedback message.

In a possible implementation, the second request message includes at least one of the following: a third request message, where the third request message is used to request the first channel estimation apparatus 60 to determine whether a signal received on a target resource is associated with the backscattered signal, the target resource including at least one of the following: a target time-domain resource and a target frequency-domain resource; and a fourth request message, where the fourth request message is used to request the first channel estimation apparatus 60 to determine whether target sequence information has been received, the target sequence information being associated with an identity of the BSC device or being related to a scrambling sequence of the backscattered signal.

For the channel estimation apparatus provided in this embodiment of this application, the channel estimation apparatus is the first channel estimation apparatus. Since the first channel estimation apparatus can determine, based on the parameters used when the BSC device sends a backscattered signal (or whether to perform joint channel estimation on the first signal) as indicated by the second channel estimation apparatus, whether to perform the joint channel estimation on the first signal, instead of directly performing the joint channel estimation on the first signal, the joint channel estimation on the first signal performed by the first channel estimation apparatus can be prevented from being affected by the backscattered signal associated with the first signal. Therefore, it is possible to avoid affecting the performance of channel estimation and improve the performance of the first channel estimation apparatus in demodulating radio frequency signals.

The first channel estimation apparatus in this embodiment of this application may be an electronic device, for example, an electronic device with an operating system, or may be a component in an electronic device, for example, an integrated circuit, or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The first channel estimation apparatus provided in this embodiment of this application can implement the processes implemented in the method embodiments in FIG. 6 to FIG. 9, with the same technical effects achieved. To avoid repetition, details are not repeated herein.

FIG. 11 is a possible schematic structural diagram of a channel estimation apparatus in an embodiment of this application, and the channel estimation apparatus is a second channel estimation apparatus. As shown in FIG. 11, the second channel estimation apparatus 70 may include a sending module 71.

The sending module 71 is configured to send first target information to a first channel estimation apparatus, where the first target information is used to indicate: parameters used when a BSC device sends a backscattered signal or whether to perform joint channel estimation on a first signal. The backscattered signal is obtained by the BSC device by modulating the first signal; and the first target information is used by the first channel estimation apparatus to determine whether to perform the joint channel estimation on the first signal.

In a possible implementation, the second channel estimation apparatus 70 further includes a receiving module. The receiving module is configured to receive second target information from a first device. The second target information is used to indicate parameters used when the BSC device sends the backscattered signal; the first target information is determined based on the second target information; and the first device includes any one of the following: the BSC device and another channel estimation apparatus.

In a possible implementation, the sending module 71 is further configured to send a fifth request message to the first device, where the fifth request message is used to request for parameters used when the BSC device sends the backscattered signal.

In a possible implementation, the sending module 71 is further configured to send a second request message to the first channel estimation apparatus, where the second request message is used to request the first channel estimation apparatus to determine whether a received signal is associated with the backscattered signal. The sending module 71 is specifically configured to send the first target information to the first channel estimation apparatus in a case that the second channel estimation apparatus 70 has received a first feedback message from the first channel estimation apparatus. The first feedback message is used to indicate that the signal received by the first channel estimation apparatus is associated with the backscattered signal.

For the channel estimation apparatus provided in this embodiment of this application, the channel estimation apparatus is the second channel estimation apparatus. Since the first channel estimation apparatus can determine, based on the parameters used when the BSC device sends a backscattered signal (or whether to perform joint channel estimation on the first signal) as indicated by the second channel estimation apparatus, whether to perform the joint channel estimation on the first signal, instead of directly performing the joint channel estimation on the first signal, the joint channel estimation on the first signal performed by the first channel estimation apparatus can be prevented from being affected by the backscattered signal associated with the first signal. Therefore, it is possible to avoid affecting the performance of channel estimation and improve the performance of the first channel estimation apparatus in demodulating radio frequency signals.

The second channel estimation apparatus in this embodiment of this application may be an electronic device, for example, an electronic device with an operating system, or may be a component in an electronic device, for example, an integrated circuit, or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The second channel estimation apparatus provided in this embodiment of this application can implement the processes implemented in the method embodiments in FIG. 6 to FIG. 9, with the same technical effects achieved. To avoid repetition, details are not repeated herein.

Optionally, in the embodiments of this application, as shown in FIG. 12, an embodiment of this application further provides a communication device 80 including a processor 81 and a memory 82. The memory 82 stores a program or instructions capable of running on the processor 81. For example, if the communication device 80 is a terminal, when the program or instructions are executed by the processor 81, the steps of the foregoing embodiment of the channel estimation method are implemented, with the same technical effects achieved. When the communication device 80 is a network-side device, the program or the instructions are executed by the processor 81 to implement the processes of the foregoing embodiment of the channel estimation method, with the same technical effects achieved. To avoid repetition, details are not repeated herein.

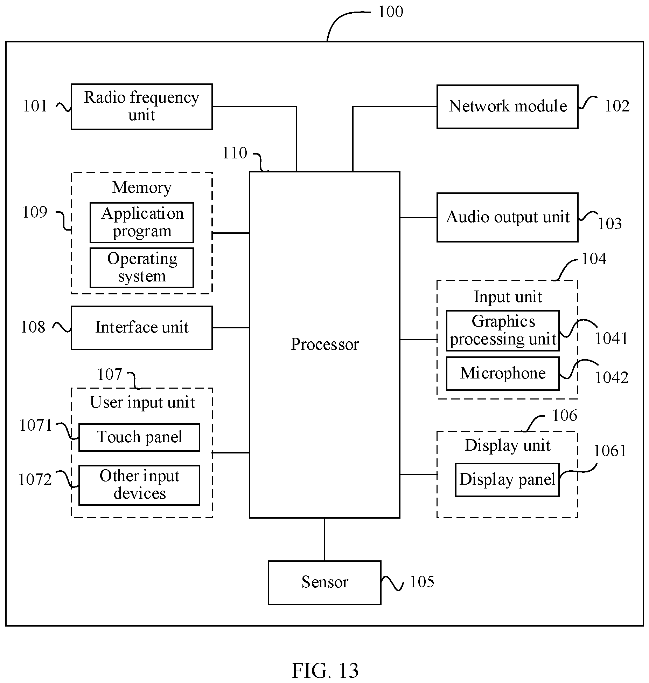

An embodiment of this application further provides a terminal including a processor and a communication interface. The communication interface is configured to receive first target information from a communication device, where the first target information is used to indicate: parameters used when a BSC device sends a backscattered signal or whether to perform joint channel estimation on a first signal. The processor is configured to determine, based on the first target information, whether to perform the joint channel estimation on the first signal. The backscattered signal is obtained by the BSC device by modulating the first signal. This terminal embodiment corresponds to the foregoing method embodiment on the terminal side. All processes and implementations in the foregoing method embodiment are applicable to this terminal embodiment, with the same technical effects achieved. Specifically, FIG. 13 is a schematic diagram of a hardware structure of a terminal implementing embodiments of this application.

In an embodiment of this application, the radio frequency unit 101 receives downlink data from a network-side device and transfers the data to the processor 110 for processing; and the radio frequency unit 101 can additionally send The terminal 100 includes but is not limited to at least part of these components: a radio frequency unit 101, a network module 102, an audio output unit 103, an input unit 104, a sensor 105, a display unit 106, a user input unit 107, an interface unit 108, a memory 109, a processor 110, and the like.

Persons skilled in the art can understand that the terminal 100 may further include a power supply (such as a battery) for supplying power to the components. The power supply may be logically connected to the processor 110 through a power management system. In this way, functions such as charge management, discharge management, and power consumption management are implemented by using the power management system. The structure of the terminal shown in FIG. 13 does not constitute any limitation on the terminal. The terminal may include more or fewer components than shown in the figure, or combine some of the components, or arrange the components differently. Details are not repeated herein.

It should be understood that the input unit 104 may include a graphics processing unit (Graphics Processing Unit, GPU) 1041 and a microphone 1042. The graphics processing unit 1041 processes image data of still pictures or videos that are obtained by an image capture apparatus (for example, camera) in an image or video capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. Optionally, the touch panel 1071 may include two parts: a touch detection apparatus and a touch controller. Specifically, the other input devices 1072 may include but are not limited to a physical keyboard, a function button (for example, volume control button or on/off button), a trackball, a mouse, and a joystick. Details are not described herein.

uplink data to the network-side device. Generally, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may include a first storage area for storing programs or instructions and a second storage area for storing data. The first storage area may store an operating system, an application program or instructions required by at least one function (for example, a sound playback function or an image playback function), and the like. In addition, the memory 109 may include a volatile memory or a non-volatile memory, or the memory 109 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 109 of the embodiments of this application includes but is not be limited to these and any other applicable types of memories.

The processor 110 may include one or more processing units. Optionally, the processor 110 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 110.

The radio frequency unit 101 is configured to receive first target information from a communication device, where the first target information is used to indicate: parameters used when a BSC device sends a backscattered signal or whether to perform joint channel estimation on a first signal.

The processor 110 is configured to determine, based on the first target information, whether to perform the joint channel estimation on the first signal.

The backscattered signal is obtained by the BSC device by modulating the first signal.

For the terminal provided in this embodiment of this application, since the terminal can determine, based on the parameters used when the BSC device sends a backscattered signal (or whether to perform joint channel estimation on the first signal) as indicated by the communication device, whether to perform the joint channel estimation on the first signal, instead of directly performing the joint channel estimation on the first signal, the joint channel estimation on the first signal performed by the terminal can be prevented from being affected by the backscattered signal associated with the first signal. Therefore, it is possible to avoid affecting the performance of channel estimation and improve the performance of the terminal in demodulating radio frequency signals.

Optionally, in this embodiment of this application, the first target information includes the target duration.

The processor 110 is specifically configured to determine to perform the joint channel estimation during the target duration, in a case that a target time-frequency resource used by the BSC device to send the backscattered signal overlaps with a time-frequency resource of the first signal.

The target time-frequency resource is determined based on the first target information.

Therefore, it can be known that since the terminal can perform the joint channel estimation during the target duration in a case that the target time-frequency resource used by the BSC device to send the backscattered signal overlaps with the time-frequency resource of the first signal, it is possible to avoid the discontinuity in the amplitude of the signal and thus avoid affecting the performance of channel estimation.

Optionally, in this embodiment of this application, the processor 110 is specifically configured to: in a case that the target duration is greater than or equal to a length of N time units of the first signal, determine to perform the joint channel estimation within the N time units during the target duration.

The processor 110 is further configured to: in a case that the target duration is less than a length of N time units of the first signal, determine not to perform the joint channel estimation within the N time units during the target duration,
where N is a positive integer.

Optionally, in this embodiment of this application, the processor 110 is specifically configured to determine not to perform the joint channel estimation within the M time units on the first signal, in a case that the first target information includes the first indication information; or determine to perform the joint channel estimation within the M time units on the first signal, in a case that the first target information includes the second indication information; or determine not to perform the joint channel estimation within the T symbols on the first signal, in a case that the first target information includes the third indication information; or determine to perform the joint channel estimation within the T symbols on the first signal, in a case that the first target information includes the fourth indication information; or determine to perform the joint channel estimation within the R time units on the first signal, in a case that the first target information includes the fifth indication information.

Optionally, in this embodiment of this application, the radio frequency unit 101 is further configured to send a first request message to the communication device, where the first request message is used to request for parameters used when the BSC device sends the backscattered signal.

Optionally, in this embodiment of this application, the radio frequency unit 101 is specifically configured to send the first request message to the communication device in a case that the terminal determines that a received signal is associated with the backscattered signal.

Optionally, in this embodiment of this application, the radio frequency unit 101 is further configured to receive a second request message from the communication device, where the second request message is used to request the terminal to determine whether a received signal is associated with the backscattered signal; and send a first feedback message to the communication device in a case that the terminal determines that the received signal is associated with the backscattered signal, where the first feedback message is used to indicate that the signal received by the terminal is associated with the backscattered signal,
where the first target information is sent by the communication device in a case that the communication device has received the first feedback message.

An embodiment of this application further provides a network-side device including a processor and a communication interface. The communication interface is configured to send first target information to a terminal, where the first target information is used to indicate: parameters used when a BSC device sends a backscattered signal or whether to perform joint channel estimation on a first signal. The backscattered signal is obtained by the BSC device by modulating the first signal; and the first target information is used by the terminal to determine whether to perform the joint channel estimation on the first signal. This network-side device embodiment corresponds to the foregoing network-side device method embodiment. All processes and implementations in the foregoing method embodiment are applicable to this network-side device embodiment, with the same technical effects achieved.

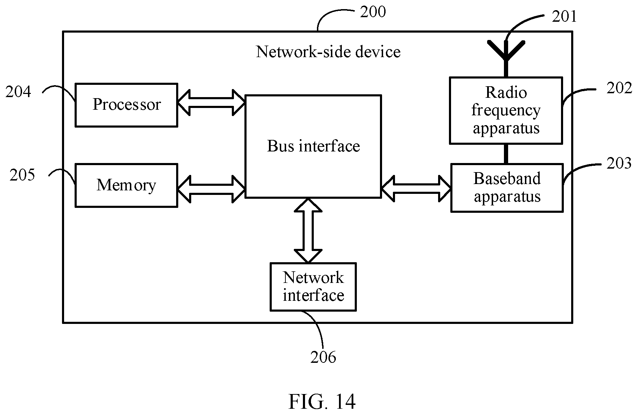

Specifically, an embodiment of this application further provides a network-side device. As shown in FIG. 14, the network-side device 200 includes an antenna 201, a radio frequency apparatus 202, a baseband apparatus 203, a processor 204, and a memory 205. The antenna 201 is connected to the radio frequency apparatus 202. In uplink, the radio frequency apparatus 202 receives information through the antenna 201, and sends the received information to the baseband apparatus 203 for processing. In downlink, the baseband apparatus 203 processes to-be-sent information, and sends the information to the radio frequency apparatus 202; and the radio frequency apparatus 202 processes the received information and then sends the information out through the antenna 201.

The method executed by the network-side device in the foregoing embodiments may be implemented on the baseband apparatus 203. The baseband apparatus 203 includes a baseband processor.

The baseband apparatus 203 may include, for example, at least one baseband processing unit, where a plurality of chips are disposed on the baseband processing unit. As shown in FIG. 14, one of the chips is, for example, a baseband processor, and connected to the memory 205 through a bus interface, to invoke the program in the memory 205 to perform the operations of the network-side device shown in the foregoing method embodiment.

The network-side device may further include a network interface 206, where the interface is, for example, a common public radio interface (Common Public Radio Interface, CPRI).

Specifically, the network-side device 200 in this embodiment of the present invention further includes: an instruction or program stored in the memory 205 and capable of running on the processor 204. The processor 204 invokes the instruction or program in the memory 205 to execute the method executed by the modules shown in FIG. 11, with the same technical effects achieved. To avoid repetition, details are not described herein again.

An embodiment of this application further provides a readable storage medium. The readable storage medium has a program or instructions stored thereon, and when the program or instructions are executed by a processor, the processes of the foregoing embodiment of the channel estimation method are implemented, with the same technical effects achieved. To avoid repetition, details are not repeated herein.

The processor is a processor in the terminal in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the processes of the foregoing embodiment of the channel estimation method, with the same technical effects achieved. To avoid repetition, details are not repeated herein.

It should be understood that the chip mentioned in an embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing embodiment of the channel estimation method, with the same technical effects achieved. To avoid repetition, details are not repeated herein.

An embodiment of this application further provides a channel estimation system including a terminal and a network-side device. The terminal may be configured to execute the steps of the foregoing channel estimation method, and the network-side device may be configured to execute the steps of the foregoing channel estimation method.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the methods in the foregoing embodiments can be implemented through software on a necessary general hardware platform or certainly through hardware only, but in many cases, the former is the more preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A channel estimation method, wherein the method comprises:
receiving, by user equipment UE from a communication device, first target information, wherein the first target information is used to indicate: parameters used when a backscatter communication BSC device sends a backscattered signal or whether to perform joint channel estimation on a first signal; and
determining, by the UE based on the first target information, whether to perform the joint channel estimation on the first signal; wherein
the backscattered signal is obtained by the BSC device by modulating the first signal.

2. The method according to claim 1, wherein the first target information is used to indicate parameters used when the BSC device sends the backscattered signal; and
the parameters used when the BSC device sends the backscattered signal comprise at least one of the following:
target time information about when the BSC device sends the backscattered signal;
at least one cycle length of the backscattered signal;
a symbol length of the backscattered signal;
a transmission duration of the backscattered signal;
a modulation mode of the backscattered signal;
a coding mode of the backscattered signal;
a length of a delimiter for the backscattered signal;
a time offset of the delimiter;
a length of a preamble of the backscattered signal;
a time offset of the preamble;
information related to synchronization of the BSC device;
information related to frequency shifting of the first signal by the BSC device; and
a target duration; wherein
the delimiter is used to indicate a starting moment of the backscattered signal; and
the target duration is a minimum duration during which amplitude and phase of the backscattered signal remain unchanged.

3. The method according to claim 2, wherein the target time information comprises any one of the following:
first time information, wherein the first time information comprises at least one of aperiodic transmission mode information and aperiodic transmission time information; and
second time information, wherein the second time information comprises at least one of periodic transmission mode information, a transmission cycle, and periodic transmission time information.

4. The method according to claim 2, wherein the information related to synchronization of the BSC device comprises at least one of the following:
a symbol or slot starting moment for the backscattered signal; and
deviation information between a timing of the BSC device and a target timing, wherein the target timing comprises any one of the following: a timing of the first signal and a timing of the communication device.

5. The method according to claim 2, wherein the information related to frequency shifting of the first signal by the BSC device comprises at least one of the following:
whether frequency shifting is supported or not;
a center frequency after frequency shifting; and
a bandwidth after frequency shifting.

6. The method according to any one of claims 2 to 5, wherein the first target information comprises the target duration; and
the determining, by the UE based on the first target information, whether to perform the joint channel estimation on the first signal comprises:
determining, by the UE, to perform the joint channel estimation during the target duration, in a case that a target time-frequency resource used by the BSC device to send the backscattered signal overlaps with a time-frequency resource of the first signal; wherein
the target time-frequency resource is determined based on the first target information.

7. The method according to claim 6, wherein the determining, by the UE, to perform the joint channel estimation during the target duration comprises:
in a case that the target duration is greater than or equal to a length of N time units of the first signal, determining, by the UE, to perform the joint channel estimation within the N time units during the target duration; and
the method further comprises:
in a case that the target duration is less than a length of N time units of the first signal, determining, by the UE, not to perform the joint channel estimation within N time units during the target duration; wherein
N is a positive integer.

8. The method according to claim 1, wherein the first target information is used to indicate whether to perform the joint channel estimation on the first signal; and
the first target information comprises at least one of the following:
first indication information, wherein the first indication information is used to indicate that the UE is not to perform the joint channel estimation within M time units on the first signal;
second indication information, wherein the second indication information is used to indicate that the UE is to perform the joint channel estimation within the M time units on the first signal;
third indication information, wherein the third indication information is used to indicate that the UE is not to perform the joint channel estimation within T symbols on the first signal;
fourth indication information, wherein the fourth indication information is used to indicate that the UE is to perform the joint channel estimation within the T symbols on the first signal; and
fifth indication information, wherein the fifth indication information is used to indicate that the UE is to perform the joint channel estimation within R time units on the first signal; wherein
the T symbols are symbols within one time unit, M and T are both positive integers greater than 1, and R is a decimal greater than 0 and less than 1.

9. The method according to claim 8, wherein the determining, by the UE based on the first target information, whether to perform the joint channel estimation on the first signal comprises:
determining, by the UE, not to perform the joint channel estimation within the M time units on the first signal, in a case that the first target information comprises the first indication information; or
determining, by the UE, to perform the joint channel estimation within the M time units on the first signal, in a case that the first target information comprises the second indication information; or
determining, by the UE, not to perform the joint channel estimation within the T symbols on the first signal, in a case that the first target information comprises the third indication information; or
determining, by the UE, to perform the joint channel estimation within the T symbols on the first signal, in a case that the first target information comprises the fourth indication information; or
determining, by the UE, to perform the joint channel estimation within the R time units on the first signal, in a case that the first target information comprises the fifth indication information.

10. The method according to claim 1, wherein the communication device comprises any one of the following: a base station, the BSC device, and another UE.

11. The method according to claim 10, wherein the first target information is determined by the communication device based on second target information; wherein
the second target information is used to indicate parameters used when the BSC device sends the backscattered signal; and the second target information is sent by a first device to the communication device, the first device comprising any one of the following: the BSC device and the another UE.

12. The method according to claim 1, wherein before the receiving, by UE from a communication device, first target information, the method further comprises:
sending, by the UE, a first request message to the communication device, wherein the first request message is used to request parameters used when the BSC device sends the backscattered signal.

13. The method according to claim 12, wherein the sending, by the UE, a first request message to the communication device comprises:
sending, by the UE, the first request message to the communication device in a case that the UE determines that a received signal is associated with the backscattered signal.

14. The method according to claim 1, wherein before the receiving, by UE from a communication device, first target information, the method further comprises:
receiving, by the UE from the communication device, a second request message, wherein the second request message is used to request the UE to determine whether a received signal is associated with the backscattered signal; and
sending, by the UE, a first feedback message to the communication device in a case that the UE determines that the received signal is associated with the backscattered signal, wherein the first feedback message is used to indicate that the signal received by the UE is associated with the backscattered signal; wherein
the first target information is sent by the communication device in a case that the communication device has received the first feedback message.

15. The method according to claim 14, wherein the second request message comprises at least one of the following:
a third request message, wherein the third request message is used to request the UE to determine whether a signal received on a target resource is associated with the backscattered signal, the target resource comprising at least one of the following: a target time-domain resource and a target frequency-domain resource; and
a fourth request message, wherein the fourth request message is used to request the UE to determine whether target sequence information has been received, the target sequence information being associated with an identity of the BSC device or being related to a scrambling sequence of the backscattered signal.

16. A channel estimation method, wherein the method comprises:
sending, by a communication device, first target information to UE, wherein the first target information is used to indicate: parameters used when a BSC device sends a backscattered signal or whether to perform joint channel estimation on a first signal; wherein
the backscattered signal is obtained by the BSC device by modulating the first signal; and
the first target information is used by the UE to determine whether to perform the joint channel estimation on the first signal.

17. The method according to claim 16, wherein before the sending, by a communication device, first target information to UE, the method further comprises:
receiving, by the communication device from a first device, second target information; wherein
the second target information is used to indicate parameters used when the BSC device sends the backscattered signal; the first target information is determined based on the second target information; and
the first device comprises any one of the following: the BSC device and another UE.

18. The method according to claim 17, wherein before the receiving, by the communication device from a first device, second target information, the method further comprises:
sending, by the communication device, a fifth request message to the first device, wherein the fifth request message is used to request parameters used when the BSC device sends the backscattered signal.

19. The method according to claim 16, wherein before the sending, by a communication device, first target information to UE, the method further comprises:
sending, by the communication device, a second request message to the UE, wherein the second request message is used to request the UE to determine whether a received signal is associated with the backscattered signal; and
the sending, by a communication device, first target information to UE comprises:
sending the first target information to the UE in a case that the communication device has received a first feedback message from the UE; wherein
the first feedback message is used to indicate that the signal received by the UE is associated with the backscattered signal.

20. A channel estimation apparatus, wherein the channel estimation apparatus is a first channel estimation apparatus, and the first channel estimation apparatus comprises a receiving module and a determining module; wherein
the receiving module is configured to receive first target information from a second channel estimation apparatus, wherein the first target information is used to indicate: parameters used when a backscatter communication BSC device sends a backscattered signal or whether to perform joint channel estimation on a first signal; and
the determining module is configured to determine, based on the first target information received by the receiving module, whether to perform the joint channel estimation on the first signal; wherein
the backscattered signal is obtained by the BSC device by modulating the first signal.

21. The channel estimation apparatus according to claim 20, wherein the first target information is used to indicate parameters used when the BSC device sends the backscattered signal; and
the parameters used when the BSC device sends the backscattered signal comprise at least one of the following:
target time information about when the BSC device sends the backscattered signal;
at least one cycle length of the backscattered signal;
a symbol length of the backscattered signal;
a transmission duration of the backscattered signal;
a modulation mode of the backscattered signal;
a coding mode of the backscattered signal;
a length of a delimiter for the backscattered signal;
a time offset of the delimiter;
a length of a preamble of the backscattered signal;
a time offset of the preamble;
information related to synchronization of the BSC device;
information related to frequency shifting of the first signal by the BSC device; and
a target duration; wherein
the delimiter is used to indicate a starting moment of the backscattered signal; and
the target duration is a minimum duration during which amplitude and phase of the backscattered signal remain unchanged.

22. The channel estimation apparatus according to claim 21, wherein the target time information comprises any one of the following:
first time information, wherein the first time information comprises at least one of aperiodic transmission mode information and aperiodic transmission time information; and
second time information, wherein the second time information comprises at least one of periodic transmission mode information, a transmission cycle, and periodic transmission time information.

23. The channel estimation apparatus according to claim 21, wherein the information related to synchronization of the BSC device comprises at least one of the following:
a symbol or slot starting moment for the backscattered signal; and
deviation information between a timing of the BSC device and a target timing, wherein the target timing comprises any one of the following: a timing of the first signal and a timing of the second channel estimation apparatus.

24. The channel estimation apparatus according to claim 21, wherein the information related to frequency shifting of the first signal by the BSC device comprises at least one of the following:
whether frequency shifting is supported or not;
a center frequency after frequency shifting; and
a bandwidth after frequency shifting.

25. The channel estimation apparatus according to any one of claims 21 to 24, wherein the first target information comprises the target duration; and
the determining module is specifically configured to determine to perform the joint channel estimation during the target duration, in a case that a target time-frequency resource used by the BSC device to send the backscattered signal overlaps with a time-frequency resource of the first signal; wherein
the target time-frequency resource is determined based on the first target information.

26. The channel estimation apparatus according to claim 25, wherein the determining module is specifically configured to: in a case that the target duration is greater than or equal to a length of N time units of the first signal, perform the joint channel estimation within the N time units during the target duration; and
the determining module is further configured to: in a case that the target duration is less than a length of N time units of the first signal, determine not to perform the joint channel estimation within the N time units during the target duration; wherein
N is a positive integer.

27. The channel estimation apparatus according to claim 20, wherein the first target information is used to indicate whether to perform the joint channel estimation on the first signal; and
the first target information comprises at least one of the following:
first indication information, wherein the first indication information is used to indicate that the first channel estimation apparatus is not to perform the joint channel estimation within M time units on the first signal;
second indication information, wherein the second indication information is used to indicate that the first channel estimation apparatus is to perform the joint channel estimation within the M time units on the first signal;
third indication information, wherein the third indication information is used to indicate that the first channel estimation apparatus is not to perform the joint channel estimation within T symbols on the first signal;
fourth indication information, wherein the fourth indication information is used to indicate that the first channel estimation apparatus is to perform the joint channel estimation within the T symbols on the first signal; and
fifth indication information, wherein the fifth indication information is used to indicate that the first channel estimation apparatus is to perform the joint channel estimation within R time units on the first signal; wherein
the T symbols are symbols within one time unit, M and T are both positive integers greater than 1, and R is a decimal greater than 0 and less than 1.

28. The channel estimation apparatus according to claim 27, wherein the determining module is specifically configured to determine not to perform the joint channel estimation within the M time units on the first signal, in a case that the first target information comprises the first indication information; or determine to perform the joint channel estimation within the M time units on the first signal, in a case that the first target information comprises the second indication information; or determine not to perform the joint channel estimation within the T symbols on the first signal, in a case that the first target information comprises the third indication information; or determine to perform the joint channel estimation within the T symbols on the first signal, in a case that the first target information comprises the fourth indication information; or determine to perform the joint channel estimation within the R time units on the first signal, in a case that the first target information comprises the fifth indication information.

29. The channel estimation apparatus according to claim 20, wherein the second channel estimation apparatus comprises any one of the following: a base station, the BSC device, and another channel estimation apparatus.

30. The channel estimation apparatus according to claim 29, wherein the first target information is determined by the second channel estimation apparatus based on second target information; wherein
the second target information is used to indicate parameters used when the BSC device sends the backscattered signal; the second target information is sent by a first device to the second channel estimation apparatus; and the first device comprises any one of the following: the BSC device and the another channel estimation apparatus.

31. The channel estimation apparatus according to claim 20, wherein the first channel estimation apparatus further comprises a sending module; and
the sending module is configured to send a first request message to the second channel estimation apparatus, wherein the first request message is used to request for the parameters used when the BSC device sends the backscattered signal.

32. The channel estimation apparatus according to claim 31, wherein the sending module is specifically configured to send the first request message to the second channel estimation apparatus in a case that the first channel estimation apparatus determines that a received signal is associated with the backscattered signal.

33. The channel estimation apparatus according to claim 20, wherein the receiving module is further configured to: receive a second request message from the second channel estimation apparatus, wherein the second request message is used to request the first channel estimation apparatus to determine whether a received signal is associated with the backscattered signal; and send a first feedback message to the second channel estimation apparatus in a case that the first channel estimation apparatus determines that the received signal is associated with the backscattered signal, wherein the first feedback message is used to indicate that the signal received by the first channel estimation apparatus is associated with the backscattered signal; wherein
the first target information is sent by the second channel estimation apparatus in a case that the second channel estimation apparatus has received the first feedback message.

34. The channel estimation apparatus according to claim 33, wherein the second request message comprises at least one of the following:
a third request message, wherein the third request message is used to request the first channel estimation apparatus to determine whether a signal received on a target resource is associated with the backscattered signal, the target resource comprising at least one of the following: a target time-domain resource and a target frequency-domain resource; and
a fourth request message, wherein the fourth request message is used to request the first channel estimation apparatus to determine whether target sequence information has been received, the target sequence information being associated with an identity of the BSC device or being related to a scrambling sequence of the backscattered signal.

35. A channel estimation apparatus, wherein the channel estimation apparatus is a second channel estimation apparatus, and the second channel estimation apparatus comprises a sending module; and
the sending module is configured to send first target information to a first channel estimation apparatus, wherein the first target information is used to indicate: parameters used when a BSC device sends a backscattered signal or whether to perform joint channel estimation on a first signal; wherein
the backscattered signal is obtained by the BSC device by modulating the first signal; and
the first target information is used by the first channel estimation apparatus to determine whether to perform the joint channel estimation on the first signal.

36. The channel estimation apparatus according to claim 35, wherein the second channel estimation apparatus further comprises a receiving module; and
the receiving module is configured to receive second target information from a first device; wherein
the second target information is used to indicate parameters used when the BSC device sends the backscattered signal; the first target information is determined based on the second target information; and
the first device comprises any one of the following: the BSC device and another channel estimation apparatus.

37. The channel estimation apparatus according to claim 36, wherein the sending module is further configured to send a fifth request message to the first device, wherein the fifth request message is used to request for the parameters used when the BSC device sends the backscattered signal.

38. The channel estimation apparatus according to claim 35, wherein the sending module is further configured to send a second request message to the first channel estimation apparatus, wherein the second request message is used to request the first channel estimation apparatus to determine whether a received signal is associated with the backscattered signal; and
the sending module is specifically configured to send the first target information to the first channel estimation apparatus in a case that the second channel estimation apparatus has received a first feedback message from the first channel estimation apparatus, wherein
the first feedback message is used to indicate that the signal received by the first channel estimation apparatus is associated with the backscattered signal.

39. A terminal, comprising a processor and a memory, wherein the memory stores a program or instructions capable of running on the processor, and when the program or instructions are executed by the processor, the steps of the channel estimation method according to any one of claims 1 to 19 are implemented.

40. A network-side device, comprising a processor and a memory, wherein the memory stores a program or instructions capable of running on the processor, and when the program or instructions are executed by the processor, the steps of the channel estimation method according to any one of claims 16 to 19 are implemented.

41. A readable storage medium, wherein the readable storage medium has a program or instructions stored thereon, and when the program or instructions are executed by a processor, the steps of the channel estimation method according to any one of claims 1 to 19 are implemented.
